**Europäisches Patentamt**

**European Patent Office**

**Office européen des brevets**

(19)

(11) Veröffentlichungsnummer: **0 295 313**
**A1**

(12) # EUROPÄISCHE PATENTANMELDUNG

veröffentlicht nach Art. 158 Abs. 3 EPÜ

(21) Anmeldenummer: **88900609.4**

(22) Anmeldetag: **14.12.87**

Daten der zugrundeliegenden internationalen Anmeldung:

(86) Internationale Anmeldenummer:
**PCT/SU 87/00143**

(87) Internationale Veröffentlichungsnummer:
**WO 88/04818 (30.06.88 88/14)**

(51) Int. Cl.⁴: **G 11 B 7/00**

(30) Priorität: **15.12.86 SU 4157160**

(43) Veröffentlichungstag der Anmeldung: **21.12.88**
**Patentblatt 88/51**

(84) Benannte Vertragsstaaten: **AT BE CH DE FR GB IT LI LU NL SE**

(71) Anmelder: **INSTITUT PROBLEM MODELIROVANIA V ENERGETIKE AKADEMII NAUK UKRAINSKOI SSR, pr. Pobedy, 56, Kiev, 252680 (SU)**

(72) Erfinder: **ANTONOV, Alexandr Alexandrovich, pr. Vernadskogo, 85-64, Kiev, 252142 (SU)**
Erfinder: **PETROV, Vyacheslav Vasilievich, ul. Montazhnikov, 104, Kiev, 252069 (SU)**

(74) Vertreter: **Füchsle, Klaus, Dipl.-Ing. et al, Hoffmann. Eitle & Partner Patentanwälte Arabellastrasse 4, D-8000 München 81 (DE)**

(54) **OPTISCHE SPEICHERVORRICHTUNG.**

(57) Optischer Speicher enthält einen optischen Informationsträger (1), der in einem mit einer Immersionsflüssigkeit (9) gefüllten Behälter (6) eingeschlossen ist, bei dem auf transparenten Abschnitten der Wand mindestens zwei unbewegliche optische Elemente (8) angebracht sind, die mit optischen Köpfen (10) gekoppelt sind, deren jeder eine Quelle (11) modulierter kohärenter Strahlung, ein bewegliches optisches Element (12), einen Lichtteiler (13) und einen Fotoempfänger (14) umfaßt. Der optische Speicher wird mit einem externen Informationsrechensystem mit Hilfe einer Steuereinheit (18) gekoppelt, die mit den Fotoempfängern (14) und den Quellen (11) modulierter kohärenter Strahlung verbunden ist. Jeder Fotoempfänger (14) ist an eine Selbstfokussiereinheit (14) angeschlossen, deren Ausgang mit dem beweglichen optischen Element (12) kinematisch verbunden ist, während einer der Fotoempfänger (14) mit einer Spurumschalteinheit (17) gekoppelt ist, die an eine Spurverfolgungseinheit (16) angeschlossen ist. Die Steuereinheit (18) ist mit der Spurumschalteinheit (17) und mit der Spurverfolgungseinheit (16) verbunden, die mit einer Informationsadressierungseinheit (20) gekoppelt ist, die mit dem optischen Informationsträger (1) kinematisch verbunden ist.

00295313

Die Erfindung bezieht sich auf die Technik zum Aufzeichnen und Auslesen von Informationen unter Benutzung einer modulierten elektromagnetischen Strahlenwirkung und mit einer relativen Verschiebung des Schreiblesekopfes und des optischen Informationsträgers.

Stand der Technik

Es ist ein optischer Speicher (US, A, 4404571) bekannt, der auf Basis eines zylindrischen optischen Informationsträgers gebaut ist. Der bekannte optische Speicher wird durch eine geringe Informationsschreibdichte gekennzeichnet, denn in diesem wird der Einsatz eines optischen Kopfes vorausgesetzt, während zwischen den Informationsspuren Abstände vorhanden sind.

Am nächsten kommt der angemeldeten technischen Lösung nach dem technischen Wesen und dem erreichbaren Effekt ein optischer Speicher (DE, A, 2522405), der einen optischen Informationsträger mit Bezugsspuren auf seiner Speicherschicht, mindestens zwei mit dem optischen Informationsträger optisch gekoppelte optische Köpfe, deren jeder aus einer optischen Kette von einer Quelle modulierter kohärenter Strahlung, einem beweglichen optischen Element, einem Lichtteiler, einem Fotoempfänger ausgeführt ist, dessen erster Ausgang an einen jeweiligen Eingang einer externen Steuereinrichtung angeschlossen ist, mindestens zwei Selbstfokussiereinheiten, an deren Eingänge jeweils der zweite Ausgang des Fotoempfängers des entsprechenden optischen Kopfes angeschlossen und deren Ausgänge jeweils mit dem beweglichen optischen Element ihres optischen Kopfes kinematisch verbunden sind, mindestens eine Spurverfolgungseinheit für den in Form einer Platte ausgeführten optischen Informationsträger enthält, an deren Eingang der dritte Ausgang des Fotoempfängers angeschlossen ist.

Dem bekannten optischen Speicher ist eine niedrige Informationsschreibdichte eigen, die durch ein unvollkommenes System zur Informationspurverfolgung bedingt ist, in dem die Verfolgung von Informationsspuren auf der gesamten Speicherschicht des optischen Informationsträgers vorgesehen ist.

00295313

### Offenbarung der Erfindung

Der Erfindung liegt die Aufgabe zugrunde, einen derartigen optischen Speicher zu schaffen, der es gestattet, den Großteil der Speicherschicht des optischen Informationsträgers von Bezugsspuren zu befreien und damit die Schreibdichte der Informationen auf dem optischen Informationsträger zu erhöhen.

Das Wesen der Erfindung besteht darin, daß in dem optischen Speicher, der einen optischen Informationsträger mit Bezugsspuren auf seiner Speicherschicht, mindestens zwei mit dem optischen Informationsträger optisch gekoppelte optische Köpfe, deren jeder aus einer optischen Reihenschaltung von einer Quelle modulierter kohärenter Strahlung, einem beweglichen optischen Element, einem Lichtteiler, einem Fotoempfänger ausgeführt ist, dessen erster Ausgang an einen jeweiligen Signaleingang einer mit einem Datenbus verbundenen Steuereinheit angeschlossen ist, deren Signalausgänge an die Eingänge der Quellen modulierter kohärenter Strahlung der entsprechenden optischen Köpfe angeschlossen sind, mindestens zwei Selbstfokussiereinheiten, an deren jeweiligen Eingang der zweite Ausgang des Fotoempfängers des entsprechenden optischen Kopfes geschaltet und deren jeweiliger Ausgang mit dem beweglichen optischen Element ihres optischen Kopfes kinematisch verbunden ist, mindestens eine Spurverfolgungseinheit für den optischen Informationsträger aufweist, deren Eingang mit dem dritten Ausgang eines der Fotoempfänger elektrisch gekoppelt ist, gemäß der Erfindung eine Spurumschalteinheit, die zwischen dem Eingang der Spurverfolgungseinheit und dem dritten Ausgang des Fotoempfängers liegt, dessen vierter Ausgang an den zweiten Eingang der Spurumschalteinheit gelegt ist, an deren dritten Eingang der erste Adressenausgang der Steuereinheit angeschlossen ist, eine mit dem optischen Informationsträger kinematisch verbundene Informationsadressierungseinheit enthalten sind, deren erster Eingang an den zweiten Adressenausgang der Steuereinheit und deren zweiter Eingang an den Ausgang der Spurverfolgungseinheit angekoppelt ist, und ein optischer Informationsträger zur Anwendung kommt, der in einem mit einer Immersionsflüssigkeit gefüllten Behälter untergebracht ist und in seinen Wänden gegenüber den optischen Köpfen liegende transparente Abschnitte enthält, wobei auf jedem transparenten Abschnitt ein unbewegliches optisches Element angebracht ist, während die Bezugsspuren auf der Speicherschicht des optischen Informationsträgers nur auf dem Teil der Speicherschicht ausgeführt sind, der unter einem unbeweglichen optischen Element liegt, das mit dem optischen Kopf gekoppelt ist, dessen Fotoempfänger an die Spurumschalteinheit angeschlossen ist.

Es ist zweckmäßig, in den optischen Speicher zusätzliche Spurverfolgungseinheiten einzuführen, deren Anzahl um eins kleiner als die der optischen Köpfe ist, wobei der Ausgang einer jeden zusätzlichen Spurverfolgungseinheit mit einem zusätzlichen Eingang des beweglichen optischen Elementes ihres optischen Kopfes kinematisch verbunden und deren Eingang mit dem dritten Ausgang des Fotoempfängers ihres optischen Kopfes gekoppelt ist.

Im optischen Speicher ist ein röhrenförmiger optischer Informationsträger vorzugsweise einzusetzen, der eine Unterlage enthält, auf deren Oberfläche eine Speicherschicht aufgetragen ist.

Es ist möglich, daß im optischen Speicher die Spurumschalteinheit ein Monoflop und ein T-Flipflop, deren Eingänge zusammen- und an den ersten Ausgang der Steuereinheit angeschaltet sind, ein erstes und ein zweites UND-Glied, an deren erste Eingänge der erste Ausgang des Monoflops und an deren zweite Eingänge der erte bzw. der zweite Ausgang des T-Flipflops angeschlossen sind, einen ersten, einen zweiten und einen dritten Analogschalter, wobei an den Steuereingang des ersten Analogschalters der Ausgang des ersten UND-Gliedes, an den Steuereingang des zweiten Analogschalters der zweite Ausgang des Monoflops, an den Steuereingang des dritten Analogschalters der Ausgang des zweiten UND-Gliedes, an den Signaleingang des ersten Analogschalters der dritte Ausgang des in den mit dem Bezugsspuren enthaltenden Abschnitt der Speicherschicht des optischen Informationsträgers gekoppelten optischen Kopf eingehenden Fotoempfängers, an den Signaleingang des zweiten Analogschalters der vierte Ausgang
des gleichen Fotoempfängers angeschlossen ist, einen Analoginverter, dessen Eingang an den dritten Ausgang des
selben Fotoempfängers und dessen Ausgang an den Signaleingang des dritten Analogschalters angekoppelt ist, und
einen Analogsummator enthält, an dessen ersten, zweiten
und dritten Eingang jeweils die Ausgänge des ersten, zweiten und dritten Analogschalters angeschlossen sind und
dessen Ausgang an seine eigene Spurverfolgungseinheit gelegt ist.

Möglich ist es auch, daß die Spurumschalteinheit ein
erstes Monoflop, dessen Eingang über einen ersten Verbindungsleiter an den ersten Ausgang der Steuereinheit angeschlossen ist, ein zweites Monoflop, dessen Eingang über
einen zweiten Verbindungsleiter an den ersten Ausgang der
Steuereinheit angeschlossen ist, ein RS-Flipflop und ein
erstes ODER-Glied, an deren zwei Eingänge der erste bzw.
der zweite Verbindungsleiter der Steuereinheit angeschlossen sind, ein T-Flipflop, an dessen Eingang der Ausgang
des ersten ODER-Gatters angekoppelt ist, ein erstes, zweites, drittes, viertes, fünftes, sechstes, siebentes und
achtes UND-Glied, wobei an die drei Eingänge des erstes
UND-Gliedes der erste Ausgang des RS-Flipflops, der zweite
Ausgang des T-Flipflops und der zweite Ausgang des zweiten
Monoflops, an die drei Eingänge des zweiten UND-Gliedes
der erste Ausgang des RS-Flipflops, der erste Ausgang des
T-Flipflops und der erste Ausgang des zweiten Monoflops,
an die drei Eingänge des dritten UND-Gliedes der erste
Ausgang des RS-Flipflops, der erste Ausgang des T-Flipflops
und der zweite Ausgang des zweiten Monoflops, an die drei
Eingänge des vierten UND-Gliedes der erste Ausgang des
RS-Flipflops, der zweite Ausgang des T-Flipflops und der
erste Ausgang des zweiten Monoflops, an die drei Eingänge des fünften UND-Gliedes der zweite Ausgang des RS-Flipflops, der zweite Ausgang des T-Flipflops und der zweite Ausgang des ersten Monoflops, an die drei Eingänge des sechsten UND-Gliedes der zweite Ausgang des RS-Flipflops, der zweite Ausgang des T-Flipflops und der erste Ausgang des ersten Monoflops, an die drei Eingänge des siebenten UND-Gliedes der zweite Ausgang des RS-Flipflops, der erste Ausgang des T-Flipflops und der zweite Ausgang des ersten Monoflops, an die drei Eingänge des achten UND-Gliedes der zweite Ausgang des RS-Flipflops, der erste Ausgang des T-Flipflops und der erste Ausgang des ersten Monoflops angeschlossen sind, ein zweites ODER-Glied, an dessen zwei Eingänge die Ausgänge des ersten bzw. fünften UND-Gliedes angekoppelt sind, ein drittes ODER-Glied, an dessen zwei Eingänge die Ausgänge des zweiten bzw. sechsten UND-Gliedes angeschaltet sind, ein viertes ODER-Glied, an dessen zwei Eingänge die Ausgänge des dritten und siebenten UND-Gatters angeschlossen sind, ein fünftes ODER-Glied, an dessen zwei Eingänge die Ausgänge des vierten und achten UND-Gatters angeschlossen sind, einen ersten, zweiten, dritten und vierten Analogschalter, an deren Steuereingänge jeweils die Ausgänge des zweiten, dritten, vierten und fünften ODER-Gliedes und an den Signaleingang des ersten Analogschalters der dritte Ausgang des in den mit dem Bezugsspuren enthaltenden Abschnitt der Speicherschicht des optischen Informationsträgers gekoppelten optischen Kopf eingehenden Fotoempfängers und an den Signaleingang des zweiten Analogschalters der vierte Ausgang des gleichen Fotoempfängers angeschlossen ist, einen ersten und einen zweiten Analoginverter, an deren Eingänge der dritte bzw. der vierte Ausgang desselben Fotoempfängers und deren Ausgänge an die Signaleingänge des dritten bzw. vierten Analogschalters gekoppelt sind, und einen Analogsummator enthält, an dessen vier Eingänge die Ausgänge des ersten, zweiten, dritten und vierten Analogschalters angeschlossen sind und dessen Ausgang an die Spurverfolgungseinheit gelegt ist.

Die Erfindung gestattet es, in einem optischen Mehrkopf-Speicher, in dem das Positionieren durch Verschiebung des optischen Informationsträgers innerhalb eines mit einer Immersionsflüssigkeit gefüllten Behälters vorgenommen wird, die Oberflächen-Informationsschreibdichte durch Freigeben des Großteiles der Speicherschicht des optischen Informationsträgers von den Bezugsspuren und durch Anordnung einer zusätzlichen Anzahl von Informationsspuren auf den freigegebenen Abschnitten der Speicherschicht sowie durch Verringerung der Breite der Informationsspuren, die durch Verbesserung der Bündelungsschärfe hinsichtlich einer modulierten kohärenten Strahlung bei Benutzung einer Immersionsoptik erreicht wird, zu erhöhen.

Kurzbeschreibung der Zeichnungen

Die Erfindung soll nachstehend an einem konkreten Ausführungsbeispiel unter Bezugnahme auf die beiliegenden Zeichnungen näher erläutert werden. Es zeigt:

Fig. 1 ein Strukturschaltbild eines erfindungsgemäßen optischen Speichers;

Fig. 2 eine konstruktive Ausführung eines erfindungsgemäßen beweglichen optischen Elementes unter Benutzung einer beweglichen Linse zur Selbstfokussierung;

Fig. 3 eine konstruktive Ausführung eines erfindungsgemäßen beweglichen optischen Elementes unter Benutzung eines Drehspiegels zur Spurverfolgung und einer beweglichen Linse zur Selbstfokussierung;

Fig. 4 ein Strukturschaltbild einer erfindungsgemäßen Spurumschalteinheit mit einer begrenzten Verschiebung eines elektromagnetischen Strahls;

Fig. 5 ein Strukturschaltbild einer erfindungsgemäßen Spurumschalteinheit mit einer wahlfreien Verschiebung eines elektromagnetischen Strahls;

Fig. 6 einen Teil eines Abschnitts der Speicherschicht eines erfindungsgemäßen optischen Informationsträgers mit auf diesen projizierten Strahlen bei der Verfolgung der Längsachse einer Informationsspur im vergrößerten Maßstab;

Fig. 7 einen Teil eines Abschnitts der Speicherschicht eines erfindungsgemäßen optischen Informationsträgers mit auf diesen projizierten Strahlen bei der Verfolgung der Längsachse einer Bezugsspur im vergrößerten Maßstab;

Fig. 8 einen Teil eines Abschnitts der Speicher-schicht eines erfindungsgemäßen optischen Informations-trägers mit auf diesen projizierten Strahlen bei der Verfolgung der rechten Kante einer Informationsspur im vergrößerten Maßstab;

Fig. 9 einen Teil eines Abschnitts der Speicher-schicht eines erfindungsgemäßen optischen Informations-trägers mit auf diesen projizierten Strahlen bei der Verfolgung der linken Kante einer Informationsspur im vergrößerten Maßstab;

Fig. 10a, 10b,10c,10d,10e,10f,10g Kurven, die die Arbeitsweise der erfindungsgemäßen Spurumschalteinheit veranschaulichen;

Fig. 11a,11b,11c,11d,11e,11f,11g Kurven, die die Ar-beitsweise einer erfindungsgemäßen Spurumschalteinheit er-läutern, deren Schaltbild in Fig. 4 dargestellt ist;

Fig. 12a,12b,12c,12d,12e,12f,12g,12h,12i,12k,12l, 12m,12n,12p,12q Kurven, die die Arbeitsweise einer er-findungsgemäßen Spurumschalteinheit erläutern, deren Schalt-bild in Fig. 5 dargestellt ist.

Bevorzugte Ausführungsform der Erfindung

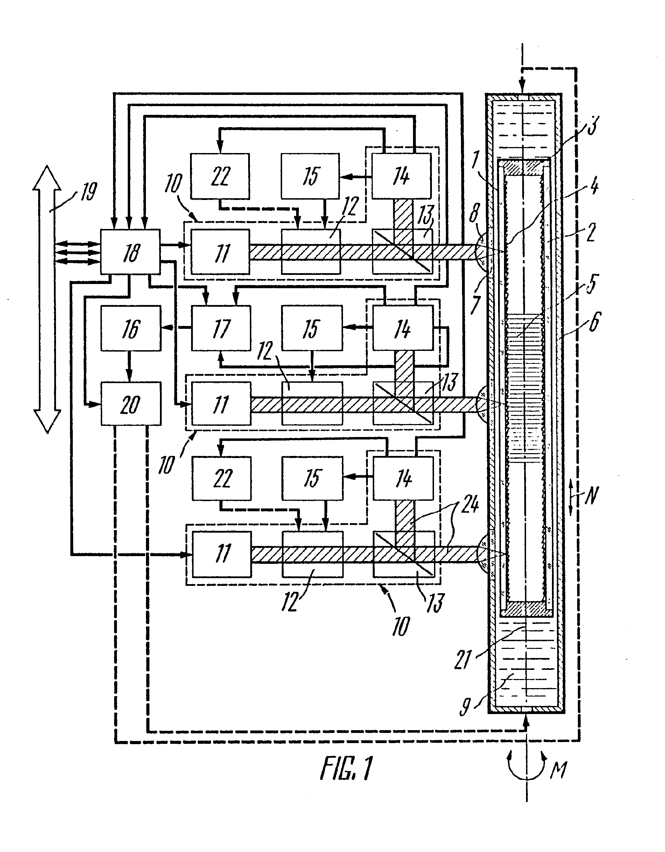

Der optische Speicher, dessen Ausführungsbeispiel in Fig. 1 dargestellt ist, enthält einen röhrenförmigen optischen Informationsträger 1 in Form einer transparenten zylindrischen Unterlage 2 mit stirnseitigen hermetisierenden Blindflanschen 3. Auf die Innenfläche der zylindrischen Unterlage 2 ist eine Speicherschicht 4 aufgetragen, die einen Abschnitt 5 mit vorher aufgetragenen Spuren aufweist. Der röhrenförmige optische Informationsträger 1 ist in einem hermetischen Behälter 6 eingeschlossen, in dessen Wänden transparente Abschnitte 7 mit an diesen angebrachten unbeweglichen optischen Elementen 8 (hier Immersionsobjektive) vorhanden sind. Der hermetisch abgedichtete Behälter 6 ist mit einer Immersionsflüssigkeit 9 (beispielsweise mit destilliertem Wasser) gefüllt.

Der optische Speicher enthält drei optische Köpfe 10 (im allgemeinen Fall können mindestens zwei davon sein). Jeder optische Kopf enthält eine Quelle 11 modulierter

0 295313

kohärenter Strahlung (Licht-,Infrarot-, Ultraviolettstrahlung), ein bewegliches optisches Element 12, einen Lichtteiler 13 und einen Fotoempfänger 14 (der in der Zeichnung nicht angedeutete Fotodioden, Vorverstärker und Elemente zur analogen Verarbeitung von Ausgangssignalen aufweist). Die Quellen 11 modulierter kohärenter Strahlung
können nebeneinander angeordnet werden, wodurch eine sogenannte Laserlinie gebildet wird, oder wie in Fig. 1 in
einem gleichen Abstand voneinander liegen.

Der optische Speicher enthält drei Selbstfokussiereinheiten 15 (im allgemeinen Fall können mindestens zwei
davon sein). An die zweiten Ausgänge der Fotoempfänger 14
aller optischen Köpfe 10 sind die Eingänge der Selbstfokussiereinheiten 15 angeschlossen, deren Ausgänge jeweils mit
dem beweglichen optischen Element 12 ihres eigenen optischen Kopfes 10 kinematisch verbunden sind.

Der optische Speicher enthält mindestens eine Spurverfolgungseinheit 16 und eine Spurumschalteinheit 17. Der
Eingang der Spurverfolgungseinheit 16 zur Überwachung einer Spur ist an den Ausgang der Spurumschalteinheit 17 angeschlossen, deren erster und zweiter Eingang an den dritten und vierten Ausgang des Fotoempfängers 14 des optischen
Kopfes 10 geschaltet sind, der samt der Selbstfokussiereinheit 15, den Einheiten 16 und 17 und dem unbeweglichen
optischen Element 8 einen optoelektronischen Hauptinformationskanal bilden.

Der optische Speicher weist auch eine Steuereinheit
18 auf, die über einen Datenbus 19 mit den anderen Einheiten des Informationsrechensystems verbunden ist (die Einheiten des Informationsrechensystems sind in Fig. nicht
gezeigt).

An die Signaleingänge der Steuereinheit 18 sind die
ersten Ausgänge der Fotoempfänger 14 aller optischen Köpfe
10 geschaltet, während alle Signalausgänge der Steuereinheit 18 an die Eingänge der Quellen 11 modulierter kohärenter Strahlung aller optischen Köpfe 10 angeschlossen sind.

Der Adressenausgang der Steuereinheit 18 ist an den
dritten Eingang der Spurumschalteinheit 17 mit Hilfe einer Verbindungsleitung angekoppelt, die einen oder zwei Verbindungs-Signalleiter umfassen kann.

Der optische Speicher enthält eine Informationsadressierungseinheit 20, die in Anwendung auf einen röhrenförmigen optischen Informationsträger 1 einen Antrieb zum Drehen und einen Antrieb zur Axialverschiebung (der Einfachheit halber sind diese Antriebe in Fig. nicht angedeutet) aufweist und mit dem optischen Informationsträger 1 kinematisch verbunden ist. Durch den Pfeil N ist die Bewegungsrichtung des optischen Informationsträgers 1 in Richtung seiner Achse 21 angedeutet. Durch den Pfeil M ist die Drehrichtung des optischen Informationsträgers 1 hinsichtlich seiner Achse 21 angedeutet. Der Antrieb zum Drehen kann beispielsweise elektrisch und der Antrieb zur Axialverschiebung beispielsweise hydraulisch sein, und diese Antriebe können in einer beliebigen bekannten Weise ausgeführt sein.

Der optische Speicher enthält zusätzliche Spurverfolgungseinheiten 22, deren Anzahl um eins kleiner als die der optischen Köpfe 10 ist. Jede zusätzliche Spurverfolgungseinheit 22 gehört zu ihrem zusätzlichen optoelektronischen Kanal, der einen optischen Kopf 10, ein unbewegliches optisches Element 8 und eine Selbstfokussiereinheit 15 umfaßt. Die zusätzliche Spurverfolgungseinheit 22 ist zur Verfolgung langsamer Verschiebungen von Spuren bezüglich der unbeweglichen optischen Elemente vorgesehen, die auf eine Temperaturdrift der Spuren und eine Drift des Richtdiagramms der Quelle modulierter kohärenter Strahlung zurückzuführen sind. Der Eingang jeder zusätzlichen Spurverfolgungseinheit 22 ist mit dem dritten Ausgang des Fotoempfängers 14 ihres optischen Kopfes 10 gekoppelt und deren Ausgang ist mit einem beweglichen optischen Element 23 kinematisch verbunden, das zu ihrem zusätzlichen optoelektronischen Kanal gehört. Das bewegliche optische Element 23 dient außer der Selbstfokussierung zur Ablenkung eines elektromagnetischen Strahls 24, der durch die Quelle 11 modulierter kohärenter Strahlung emittiert wird.

Der optische Speicher umfaßt ein Selbstfokussierungs-

00295313

system, das für eine Fokussierung des Strahls 24 auf die Speicherschicht 4 bei Vorhandensein radialer Schwebungen des röhrenförmigen optischen Informationsträgers 1 sorgt und eine Selbstfokussiereinheit 15, einen optischen Kopf 10, ein unbewegliches optisches Element 8, einen optischen Informationsträger 1 aufweist.

Der optische Speicher umfaßt auch ein Spurverfolgungssystem, das für die Führung des Strahls 24 über den Abschnitt 5 der Speicherschiecht 4 des optischen Informationsträgers 1 im optoelektronischen Hauptkanal sorgt und eine Spurverfolgungseinheit 16 , eine Spurumschalteinheit 17, eine Informationsadressierungseinheit 20, einen optischen Informationsträger 1 und einen optischen Kopf 10 aufweist.

Das System zur Verfolgung einer Spur durch den Strahl sorgt im zusätzlichen optoelektronischen Kanal für die Führung des Strahls 24 außerhalb des Abschnitts 5 der Speicherschicht 4 und umfaßt eine Spurverfolgungseinheit 22, einen optischen Kopf 10, ein unbewegliches optisches Element 8 und einen optischen Informationsträger 1.

Das bewegliche optische Element 12, das in Fig. 2 dargestellt ist, wo der Verlauf des Strahls 24 angedeutet ist, ist in Form einer in einer Piezohalterung 26 angeordneten beweglichen Linse 25 ausgeführt.

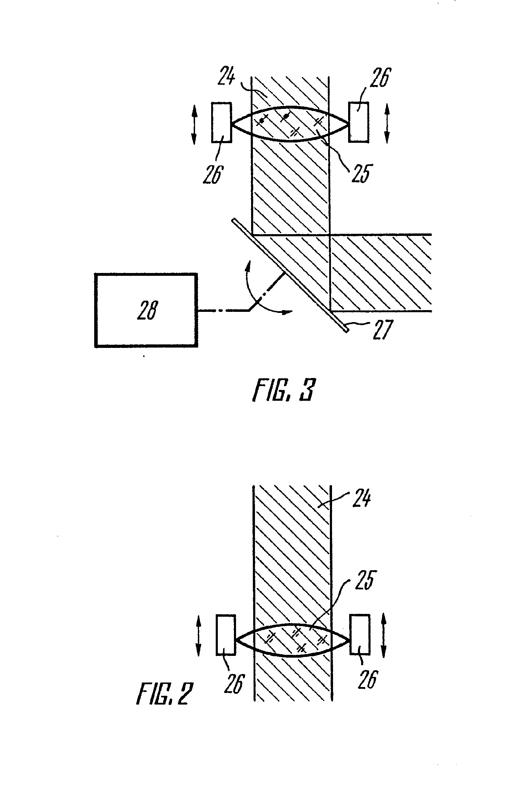

Das bewegliche optische Element 23, dessen Realisierung in Fig. 3 aufgeführt ist, ist in Form der in der Piezohalterung 26 angeordneten beweglichen Linse 25 und eines durch einen Elektromotor 28 gesteuerten Drehspiegels 27 ausgeführt, durch die der Strahl 24 der Quelle 11 durchgeht.

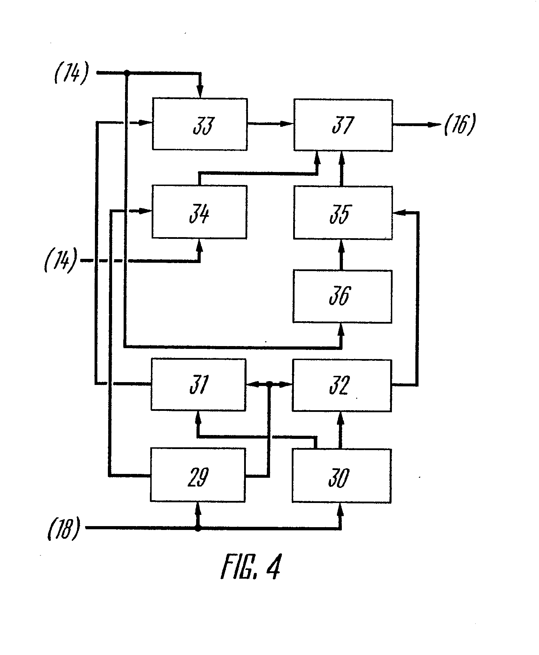

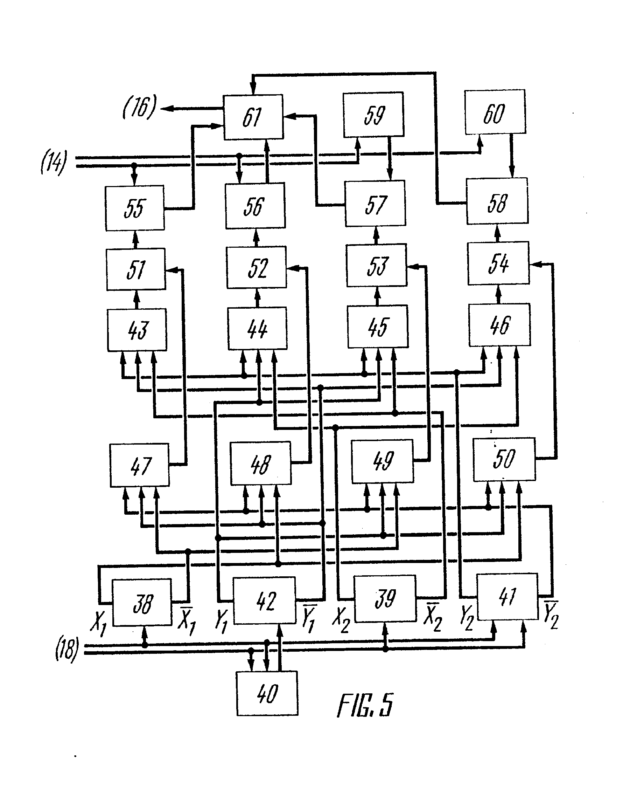

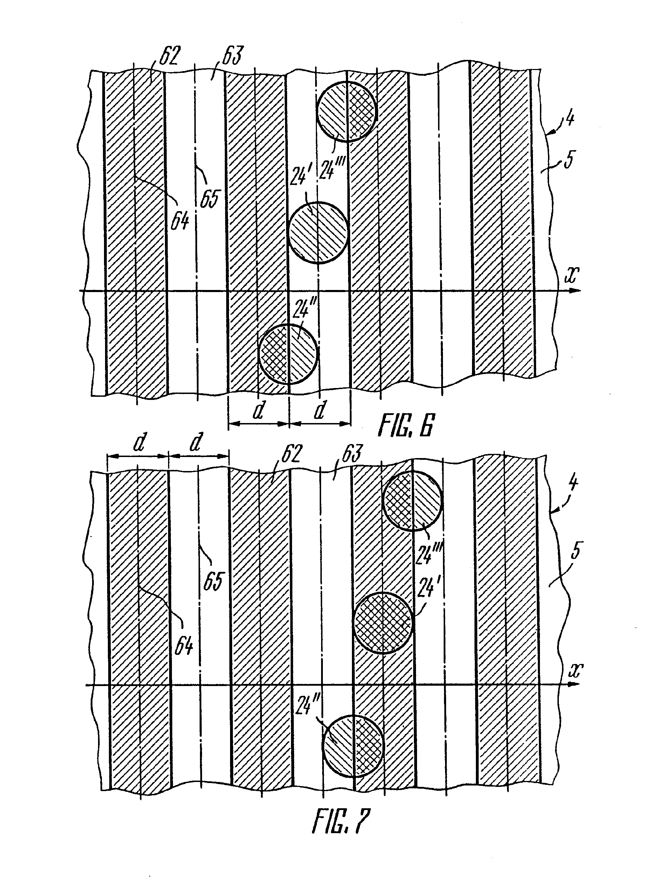

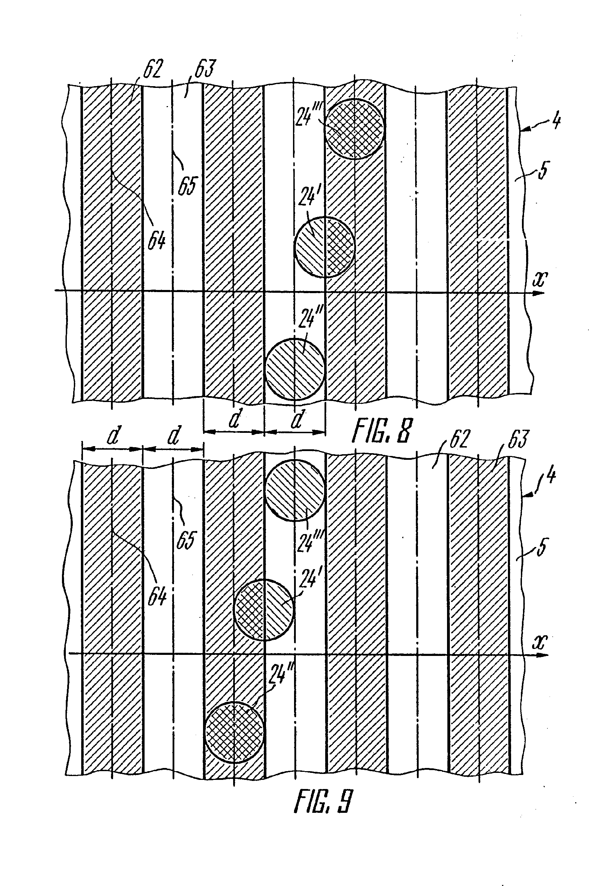

Die Spurumschalteinheit 17, deren Ausführungsbeispiel in Fig. 4 dargestellt ist, enthält ein Monoflop 29 und ein T-Flipflop 30, deren Eingänge zusammengeschaltet sind. Diese Eingänge sind an den Adressenausgang der Steuereinheit 18 mit Hilfe einer Verbindungsleitung angeschlossen, die in der vorliegenden Ausführungsform der Spurumschalteinheit 17 einen Verbindungs-Signalleiter enthält.

Der erste Ausgang des Monoflops 29 ist an die ersten Eingänge von UND-Gliedern 31 und 32 angeschlossen, zu deren zweiten Eingängen der erste bzw. der zweite Ausgang des T-Flipflops 30 geführt sind. Der Ausgang des UND-Gliedes 31 ist an den Steuereingang eines Analogschalters 33 angeschlossen. An den Steuereingang eines Analogschalters 34 ist der zweite Ausgang des Monoflops 29 angekoppelt. An den Steuereingang eines Analogschalters 35 ist der Ausgang des UND-Gliedes 32 angelegt. An den Signaleingang des Analogschalters 33 ist der dritte Ausgang des Fotoempfängers 14 angeschlossen. An den Signaleingang des Analogschalters 34 ist der vierte Ausgang des Fotoempfängers 14 geschaltet. An den Signaleingang des Analogschalters 35 ist der dritte Ausgang des Fotoempfängers 14 über einen Analoginverter 36 angeschlossen. Die Ausgänge der Analogschalter 33,34 und 35 sind jeweils an den ersten, zweiten und dritten Eingang eines Analogsummators 37 angekoppelt, dessen Ausgang an den Eingang der Spurverfolgungseinheit 16 gelegt ist.

Bei einer anderen Realisierung der Spurumschalteinheit 17 enthält die Verbindungsleitung zwischen dem Adressenausgang der Steuereinheit 18 und dem dritten Eingang der Spurumschalteinheit 17 zwei Verbindungs-Signalleiter, während der Adressenausgang der Einheit 18 mehrkanalig ausgeführt ist.

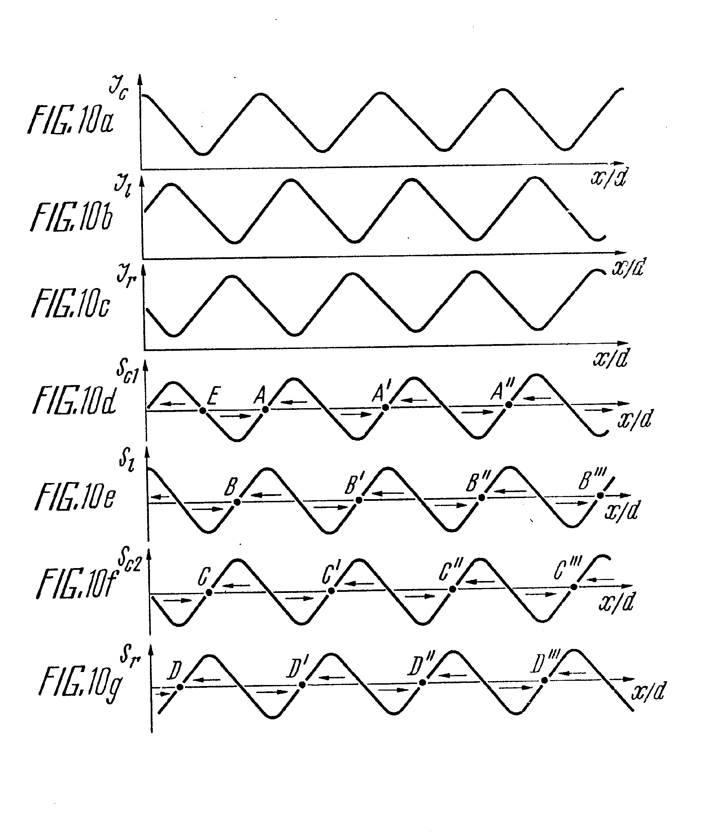

Die Spurumschalteinheit 17, deren andere Realisierung in Fig. 5 dargestellt ist, enthält ein Monoflop 38, an dessen Eingang über den ersten Verbindungs-Signalleiter der Adressenausgang der Steuereinheit 18 angeschlossen ist, und ein zweites Monoflop 39, an dessen Eingang über den zweiten Verbindungs-Signalleiter der Adressenausgang der Steuereinheit 18 geschaltet ist, sowie ein ODER-Glied 40 und ein RS-Flipflop 41, an deren zwei Eingänge über die zwei Verbindungs-Signalleiter der erste mehrkanalige Adressenausgang der Steuereinheit 18 gelegt ist.

Der Ausgang des ersten ODER-Gliedes 40 ist an den Eingang eines T-Flipflops 42 angeschlossen. Die beschriebene Spurumschalteinheit 17 umfaßt auch UND-Glieder 43,

00295313

44,45,46,47,48,49 und 50. An die drei Eingänge des UND-
-Gliedes 43 sind der erste Ausgang des RS-Flipflops 41
und der zweite Ausgang des Monoflops 39 angekoppelt. An
die drei Eingänge des UND-Gliedes 44 sind der erste Ausgang des RS-Flipflops 41, der erste Ausgang des T-Flipflops 42 und der erste Ausgang des Monoflops 39 angeschlossen. An die drei Eingänge des UND-Gliedes 45 sind
der erste Ausgang des RS-Flipflops 41, der erste Ausgang
des T-Flipflops 42 und der zweite Ausgang des Monoflops
39 geschaltet. An die drei Eingänge des UND-Gliedes 46
sind der erste Ausgang des RS-Flipflops 41, der zweite Ausgang des T-Flipflops 42 und der erste Ausgang des Monoflops 39 angeschlossen. An die drei Eingänge des UND-Gliedes 47 sind der zweite Ausgang des RS-Flipflops 41, der
zweite Ausgang des T-Flipflops 42 und der zweite Ausgang
des Monoflops 38 angeschaltet. An die drei Eingänge des
UND-Gliedes 48 sind der zweite Ausgang des RS-Flipflops
41, der zweite Ausgang des T-Flipflops 42 und der erste
Ausgang des Monoflops 38 angeschlossen. An die drei Eingänge des UND-Gliedes 49 sind der zweite Ausgang des RS-
-Flipflops 41, der erste Ausgang des T-Flipflops 42 und
der zweite Ausgang des Monoflops 38 angekoppelt. An die
drei Eingänge des UND-Gliedes 50 sind der zweite Ausgang
des RS-Flipflops 41, der erste Ausgang des T-Flipflops 42
und der erste Ausgang des Monoflops 38 angeschlossen. Die
Ausgänge der UND-Glieder 43,47 sind an die zwei Eingänge
eines ODER-Gliedes 51 angeschaltet. Die Ausgänge der UND-
-Glieder 44,48 sind an die zwei Eingänge eines ODER-Gliedes 52 geschaltet. Die Ausgänge der UND-Glieder 45 und 49
sind an die zwei Eingänge eines ODER-Gliedes 53 angeschlossen. Die Ausgänge der UND-Glieder 46 und 50 sind an die
zwei Eingänge eines ODER-Gliedes 54 geschaltet. Die Ausgänge der ODER-Glieder 51,52,53 und 54 sind jeweils an
die Steuereingänge von Analogschaltern 55,56,57 und 58 gelegt. An den Signaleingang des Analogschalters 55 ist der
dritte Ausgang des Fotoempfängers 14 angekoppelt. An den
Signaleingang des Analogschalters 56 ist der vierte Ausgang des Fotoempfängers 14 angeschlossen. An den Signaleingang des Analogschalters 57 ist der dritte Ausgang des Fotoempfängers 14 über einen Analoginverter 59 geschaltet. An den Signaleingang des Analogschalters 58 ist der vierte Ausgang des Fotoempfängers 14 über einen Analoginverter 60 angeschlossen. Die Ausgänge der Analogschalter 55,56,57 und 58 sind jeweils an den ersten, zweiten, dritten und vierten Eingang eines Analogsummators 61 angeschlossen, dessen Ausgang an die Spurverfolgungseinheit 16 angekoppelt ist.

Fig. 6 zeigt einen Teil des Abschnitts 5 der Speicherschicht 4 des optischen Informationsträgers 1 mit Bezugsspuren 62 und Informationsspuren 63. Im vorliegenden Ausführungsbeispiel sind die Bezugsspuren 62 und die Informationsspuren 63 der Einfachheit halber in gleicher Breite d gezeigt. Die Bewegungsrichtung des elektromagnetischen Strahls 24 quer zu den Spuren 62 und 63 ist im Folgevorgang mit x bezeichnet. Die Bezugsspur 62 und die Informationsspur 63 weisen Längsachse 64 bzw. 65 auf. In Anwendung auf eine Dreistrahlvariante der Spurverfolgung (das Beugungsgitter in den optischen Köpfen 10 ist in Fig. 1 zur Vereinfachung nicht gezeigt) sind auf dem gegebenen Teil des Abschnitts 5 der Speicherschicht 4 Projektionen dreier elektromagnetischer Strahlen 24,24'', 24''' dargestellt, die durch Spaltung des Ausgangsstrahls 24 gewonnen sind.

Die Lage der in Fig. 6 dargestellten Projektionen der Strahlen 24', 24'', 24''' entspricht der Verfolgung der Achse 65 der Informationsspur 63.

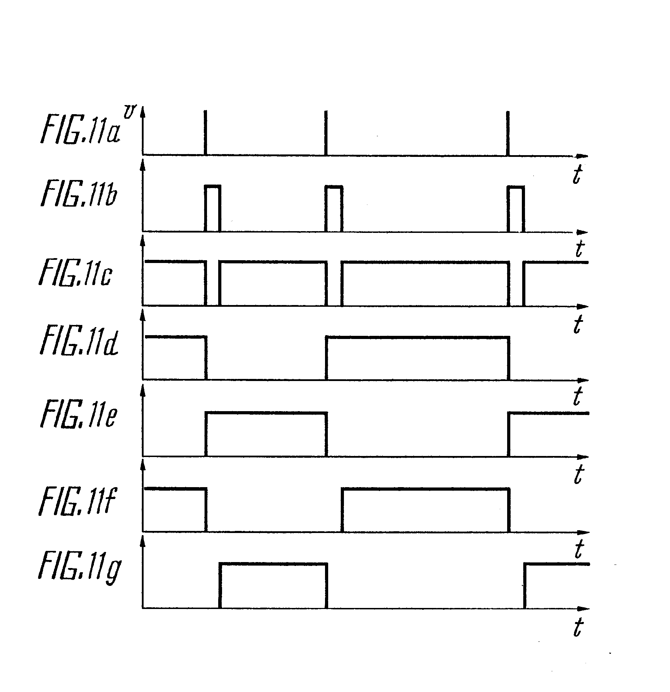

In Fig. 7,8,9 ist der gleiche Teil des Abschnitts 5 der Speicherschicht 4 dargestellt. Die Lage der Projektionen der Strahlen 24', 24'', 24''' in Fig. 7 entspricht der Verfolgung der Achse 64 der Bezugsspur 62. Die Lage der Projektionen der Strahlen 24', 24'', 24''' in Fig. 8 entspricht der Verfolgung der rechten Kante der Informationsspur 63 und die in Fig. 9 der Verfolgung der linken Kante der gleichen Spur.

Fig. 10a,10b,10c,10d,10e,10f,10g zeigen Kurven, die die Arbeitsweise der Spurumschalteinheit 17 veranschau-

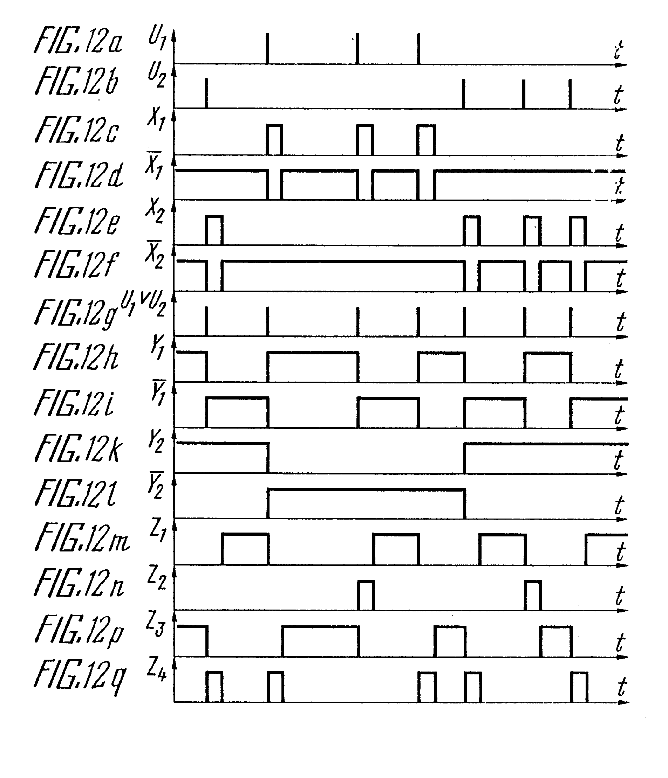

lichen, Fig. 11a, 11b, 11c, 11d, 11e, 11f, 11g Kurven, die die Arbeit der Spurumschalteinheit 17 erläutern, deren Schaltbild in Fig. 4 dargestellt ist. In Fig. 12a,12b, 12c,12d,12e,12f,12g,12h,12i,12k,121,12m,12n,12p,12q sind Kurven wiedergegeben, die die Arbeit der Spurumschalteinheit 17 veranschaulichen, deren Schaltbild in Fig. 5 dargestellt ist.

Der optische Speicher arbeitet wie folgt. Im Schreibbetrieb fallen die zu speichernden Informationen von der Steuereinheit 18 an den Eingängen dreier (im allgemeinen Fall mindestens zweier) Quellen 11 (Fig.1) modulierter kohärenter Strahlung (beispielsweise von Gas- oder Festkörperlasern mit optischen Modulatoren oder von Halbleiterlasern) an und modulieren deren Strahlung nach der Intensität oder in einer anderen bekannten Weise. Diese modulierte elektromagnetische Strahlung wird über die entsprechenden optoelektronischen Kanäle auf die Speicherschicht 4 eines optischen Informationsträgers 1 projiziert. Der vom optischen Informationsträger 1 reflektierte Strahl 24 (oder mehrere Strahlen) wird mit Hilfe des Lichtteilers 13 auf den Fotoempfänger 14 gerichtet. Die auf den Eingang des Fotoempfängers 14 auftreffende elektromagnetische Strahlung wird durch Fotodioden (oder andere Licht-Signal- -Wandler) in Fotoströme umgesetzt. Die Fotoströme werden mit Hilfe von zum Fotoempfänger 14 gehörigen Schaltungen zur analogen Signalverarbeitung in (beispielsweise zur Schreibkontrolle benutzte) reproduzierbare Signale sowie in Abweichungssignale für die Selbstfokussierungs- und Spurverfolgungssysteme umgesetzt, die in der Selbstfokussiereinheit 15 bzw. der Spurverfolgungseinheit 16 abgearbeitet werden. Das am Ausgang der Einheit 16 zur Verfolgung einer Spur im optoelektronischen Hauptkanal erzeugte Steuersignal wird auf die Informationsadressierungseinheit 20 gegeben und kompensiert axiale Schwebungen des optischen Informationsträgers 1 für sämtliche optoelektronischen Kanäle, weshalb die Systeme zur Verfolgung einer Spur in den zusätzlichen optoelektronischen Kanälen eine Hilfsrolle spielen und lediglich zum Ausgleich der Temperaturdrift der Spuren und der Drift des Richtdiagramms der Quellen 11 modulierter kohärenter Strahlung dienen.

Infolgedessen sind die Systeme zur Verfolgung einer Spur der zusätzlichen optoelektronischen Kanäle schmalbandiger gegenüber dem System zur Verfolgung einer Spur des zusätzlichen optoelektronischen Hauptkanals, und die Rückkopplungsschleife schließt sich in ihnen über individuelle bewegliche optische Stellelemente 12, die in den zusätzlichen optoelektronischen Kanälen zweifunktional sind, denn auf sie werden auch Abweichungssignale von den Selbstfokussiereinheiten 15 geliefert. Da die Bezugsspuren 62 (Fig. 6 bis 9) im vorliegenden Ausführungsbeispiel des optischen Speichers, indem sie mit den Informationsspuren 63 abwechseln, nur auf dem Abschnitt 5 der Speicherschicht 4 des optischen Informationsträgers 1 (nämlich auf dem dem optoelektronischen Hauptkanal zugeordneten Abschnitt) vorhanden sind, so können auf den restlichen Abschnitten der Speicherschicht 4 doppelt so viele Informationsspuren 63 aufgezeichnet werden. Dies wird durch Verschiebung des optischen Informationsspeichers 1 (Fig.1) um einen der Breite d der Spur 63 (Fig.6 bis 9) des Abschnitts 5 der Speicherschicht 4 gleichen Halbschritt mit Hilfe der Spurumschalteinheit 17 ermöglicht. Mit Hilfe der Spurumschalteinheit 17 wird im optoelektronischen Hauptkanal nicht nur die Achse 65 der Informationsspur 63, sondern auch die Achse 64 der Bezugsspur 62 verfolgt.

Da der optische Informationsträger 1 in dem mit der Immersionsflüssigkeit 9 gefüllten hermetischen Behälter 6 eingeschlossen ist, wird eine höhere Auflösung der Immersionsoptik und damit eine zusätzliche Erhöhung der Informationsschreibdichte erreicht.

Die auf dem optischen Informationsträger 1 in dieser Weise aufgezeichnete Information kann zerstörungsfrei eine längere Zeit aufbewahrt und vielfach abgelesen werden.

Im Lesebetrieb emittieren sämtliche Quellen 11 (Fig. 1) modulierter kohärenter Strahlung Strahlen 24 konstanter Intensität, während die Selbstfokussierungs- und Spurverfolgungssysteme in Analogie zum oben Beschriebenen arbeiten. Die wiederzugebenden Signale werden hierbei in den Fotoempfängern 14 gebildet und gelangen auf die Steuereinheit 18.

Es ist auch eine Betriebsart des angemeldeten optischen Speichers möglich, wo in den einen optoelektronischen Kanälen die Informationen aufgezeichnet und in den anderen abgelesen werden.

Das in Fig. 2 dargestellte bewegliche optische Element 12 arbeitet wie folgt. Auf die Piezohalterung 26 wirkt ein Abweichungssignal des Selbstfokussierungssystems ein, wodurch eine Axialverschiebung der Linse 25 hervorgerufen wird, die für eine Fokussierung des Strahls 24 auf die Speicherschicht 4 des optischen Informationsträgers 1 sorgt.

Das in Fig. 3 gezeigte bewegliche optische Element 23 arbeitet wie folgt. Bei der Belegung des zur Spurverfolgungseinheit 22 gehörenden Elektromotors 28 mit einem Abweichungssignal ändert der erstere die Stellung des Drehspiegels 27 in der Weise, daß die Mitte des Strahls 24 auf die Achse 65 der Spur 63 zurückkehrt. Bei der Einwirkung des Abweichungssignals des Selbstfokussierungssystems auf die Piezohalterung 26 ändert sich die Lage der Linse 25 in Bezug auf die eigene Achse in der Weise, daß sich der Strahl 24 als auf die Speicherschicht 4 des optischen Informationsträgers 1 fokussiert erweist.

Die in Fig. 4 wiedergegebene Spurumschalteinheit 17 arbeitet folgenderweise. Wie in Fig. 10a,10b,10c gezeigt, können aus den beispielsweise einer optischen Dreistrahlanordnung entsprechenden optischen Ausgangssignalen mit Hilfe von zum Fotoempfänger 14 gehörenden Fotodioden (oder anderen Licht-Signal-Wandlern) ein dem Zentralstrahl 24′ (Fig. 6 bis 9) entsprechender Fotostrom $I_c$ (Fig. 10a), ein dem linken Strahl 24′′ (Fig. 6 bis 9) entsprechender Fotostrom $I_1$ (Fig. 10b), ein dem rechten Strahl 24′′′ (Fig. 6 bis 9) entsprechender Fotostrom $I_r$ (Fig. 10c) erzeugt werden. Bei einer Verschiebung dieser Strahlen 24′, 24′′,24′′′ quer zu den Bezugsspuren 62 und den Informationsspuren 63, d.h. in Richtung der x-Achse, wird der Wert der Fotoströme $I_c, I_l, I_r$ gemäß Fig. 10a,10b,10c ändern. In den Fotoempfängern 14 (Fig. 1) können aus den Fotoströmen $I_c, I_l, I_r$ (Fig. 10a,10b,10c) mit Hilfe von Analogoperationen Verfolgungssignale $S_{cl}, S_{c2}, S_l, S_r$ (Fig. 10d,10e,10f,10g) gewonnen werden. Das Signal $S_{cl}$ (Fig.10d) der Verfolgung der Achse 65 (Fig. 6) der Informationsspur 63 kann gemäß Ausdruck

$$S_{cl} = k_o \frac{I_l - I_r}{2}$$

erhalten werden.

Das Signal $S_{c2}$ (Fig. 10f) der Verfolgung der Achse 64 (Fig. 7) der Bezugsspur 62 kann gemäß Ausdruck

$$S_{c2} = k_o \frac{I_r - I_e}{2}$$

erhalten werden.

Das Signal $S_l$ (Fig. 10e) der Verfolgung der linken Kante der Informationsspur 63 (Fig. 9) kann gemäß Ausdruck

$$S_l = k_o(I_c - \frac{I_l + I_r}{2})$$

gewonnen werden.

Das Signal $S_r$ (Fig. 10g) der Verfolgung der rechten Kante der Informationsspur 63 (Fig. 8) kann gemäß Ausdruck

$$S_r = k_o(\frac{I_l + I_r}{2} - I_c)$$

erhalten werden, worin $k_o$ ein Proportionalitätsfaktor ist.

Infolge der Reaktion der Spurverfolgungseinheit 16 (Fig.1) auf die Signale $S_{cl}, S_{c2}, S_l, S_r$ werden sich die Strahlen 24', 24'', 24''' (Fig. 6 bis 9) quer zu den Spuren 62,63 in Richtungen verschieben, die in Fig. 10d,10e, 10f,10g durch Pfeile angedeutet sind. Aus der Gegenüberstellung der Abweichungssignale $S_{cl}, S_{c2}, S_l, S_r$ und der Richtungen der Reaktionen auf diese folgt, daß die einen Nullwerte der Signale $S_{cl}, S_{c2}, S_l, S_r$ stabil (Punkte A,A', ... in Fig. 10d,B,B',... in Fig. 10e,C,C', ... in Fig. 10f, D,D', D'', ... in Fig. 10g) und die anderen (beispiels-

weise Punkt E in Fig. 10d) instabil sein werden. Um also von der Verfolgung der Achse 65 der Informationsspur 63 (Fig. 6) zur Verfolgung der Achse 64 der Bezugsspur 62 (Fig. 7), oder umgekehrt, überzugehen, reicht es aus, wie aus der Gegenüberstellung der Verfolgungssignale $S_{c1}$ und $S_{c2}$ folgt, in der Spurumschalteinheit 17 das Verfolgungssignal $S_c$ zu invertieren. Um aber eine Spurumschalteinheit 17 aufzubauen, die für eine sichere Spurumschaltung in vorgegebener Weise sorgt, genügt es nicht, nur von diesem Umstand Gebrauch zu machen, denn der Strahl 24 kann mit gleichem Erfolg sowie auf die an die Ausgangsspur angrenzende linke als auch rechte Spur übergehen. Die Spurumschalteinheit 17 muß daher nicht nur die Tatsache des Überganges von einer Spur auf die andere als solche, sondern auch die Richtung des Überganges garantieren. Zu diesem Zweck werden in die Spurumschalteinheit 17 zusätzliche elektrische Baugruppen eingeführt, die eine stabile Verfolgung der vorgegebenen Grenze zwischen der Informationspur 63 und der Bezugsspur 62 (Fig. 8 und 9) gewährleisten.

Die dargelegten Erwägungen wurden auch bei der Entwicklung der in Fig. 4 wiedergegebenen Spurumschalteinheit 17 ausgenutzt. Hier wird auf den gemeinsamen Eingang des Monoflops 29 und des T-Flipflops 30 ein Impuls (Fig. 11a) des Befehls zum Übergang von einer Spur auf die andere gegeben. Unter seiner Einwirkung wird im Monoflop 29 ein Impuls (Fig. 11b) vorgegebener Dauer des Überganges gebildet, während das T-Flipflop 30 (Fig. 11c und 11d) umkippt. Aus den durch das Monoflop 29 (Fig. 11b) und das T-Flipflop 30 (Fig. 11c und 11d) gebildeten Impulsen werden mit Hilfe der UND-Glieder 31 und 32 Impulse geformt, die abwechselnd den ersten Analogschalter 33 (Fig. 11f), den zweiten Analogschalter 34 (Fig. 11b) und den dritten Analogschalter 35 (Fig. 11g) öffnen. Dadurch wird eine wechselweise stabile Verfolgung der Achse der Informationspur 63 (Fig. 6), deren linker Kante (Fig. 9) und der Achse 64 der Bezugsspur 62 (Fig. 7) gewährleistet, oder umgekehrt. Bei der Beaufschlagung des Einganges der Spurumschalteinheit 17 mit einem weiteren Impuls des Befehls zum Übergang von einer Spur auf die andere (Fig. 11a) wird ein Übergang des Strahls 24′ in einer Richtung streng entgegengesetzt zum vorhergehenden Übergang ermöglicht. Das betrachtete Ausführungsbeispiel der Spurumschalteinheit 17 läßt somit die Spuren 62,63 (Fig. 6 bis 9) in beliebiger Richtung nicht umschalten.

Das in Fig. 5 dargestellte Schaltbild der Spurumschalteinheit 17 baut auch auf den obengenannten Prinzipien auf, ist aber vom erwähnten Nachteil frei. Die Spurumschalteinheit 17 enthält gemäß diesem Schaltbild zwei Steuereingänge. Der eine Steuereingang ist mit dem ersten Verbindungs-Signalleiter zur Übertragung eines Befehls für den Übergang nach rechts (Fig. 12a) und mit dem zweiten Verbindungs-Signalleiter zur Übertragung eines Befehls für den Übergang nach links (Fig. 12b) verbunden. Unter Einwirkung beispielsweise des Befehls zum Übergang nach links (Fig. 12b) kann sich der Strahl 24′ in Abhängigkeit von der Ausgangslage von der Achse 65 der Informationsspur 63 (Fig. 6) auf die linke Kante der Informationsspur 63 (Fig. 9) und dann auf die Achse 64 der Bezugsspur 62 (Fig. 7) oder von der Achse 64 der Bezugsspur 62 (Fig. 7) auf die rechte Kante der Informationsspur 63 (Fig. 8) und im weiteren auf die Achse 65 der Informationsspur 63 (Fig. 6) verschieben. Unter der Wirkung des Befehls zum Übergang nach rechts (Fig. 12a) kann sich aber der Strahl 24′ in Abhängigkeit von der Ausgangslage von der Achse 65 der Informationsspur 63 (Fig. 6) auf die rechte Kante der Informationsspur 63 (Fig. 8) und im folgenden auf die Achse 64 der Bezugsspur 62 (Fig. 7) oder von der Achse 64 der Bezugsspur 62 (Fig.7) auf die linke Kante der Informationsspur 63 (Fig. 9) und dann auf die Achse 65 der Informationsspur 63 (Fig. 7) verschieben. Der dargelegte Algorithmus wird in der beschriebenen Spurumschalteinheit 17 realisiert. Die Impulse des Befehls des Überganges nach rechts (Fig. 12a) gelangen vom Adressenausgang der Steuereinheit 18 über den ersten Verbindungs-Signalleiter auf den Eingang des Monoflops 38 und die Impulse des Befehls zum Übergang nach links (Fig. 12b) vom Adressenausgang der Steuereinheit 18 über den zweiten Verbindungs-Signalleiter auf den Eingang des Monoflops 39. Darüber hinaus treffen diese und jene Impulse (Fig. 12a und 12b) auch auf die zwei Eingänge des ODER-Gliedes 40 und des RS-Flipflops 41 auf. Vom Ausgang des ODER-Gliedes 40 werden die Impulse (Fig. 12g) auf den Eingang des T-Flipflops 42 eingespeist. Es sei das Signal vom ersten Ausgang des Monoflops 38 mit $X_1$ (Fig. 12c) und das Signal vom zweiten Ausgang des Monoflops 38 mit $\overline{X}_1$ (Fig. 12d), das Signal vom ersten Ausgang des Monoflops 39 mit $X_2$ (Fig. 12e) und das Signal von dessen zweitem Ausgang mit $\overline{X}_2$ (Fig. 12f), das Signal vom ersten Ausgang des T-Flipflops 42 mit $Y_1$ (Fig. 12h) und vom zweiten Ausgang des T-Flipflops 42 mit $\overline{Y}_1$ (Fig. 12i), das Signal vom ersten Ausgang des RS-Flipflops 41 mit $Y_2$ (Fig. 12k) und vom zweiten Ausgang des RS-Flipflops 41 mit $\overline{Y}_2$ (Fig. 15 ) bezeichnet. Dann stellt das am ersten Eingang des ODER-Gliedes 51 ankommende Signal $Z_{11}$ eine Konjunktion der Signale vom ersten Ausgang des RS-Flipflops 41 (Fig. 12k), vom zweiten Ausgang des T-Flipflops 42 (Fig. 12k) und vom zweiten Ausgang des Monoflops 39 (Fig. 12f)

$$Z_{11} = Y_2 \wedge \overline{Y}_1 \wedge \overline{X}_2$$

dar und wird mit Hilfe des UND-Gliedes 43 (Fig. 5) erzeugt.

Das am zweiten Eingang des ODER-Gliedes 51 eintreffende Signal $Z_{12}$ stellt eine Konjunktion der Signale $Y_2$ (Fig. 12l), $Y_1$ (Fig. 12i) und $X_1$ (Fig. 12d)

$$Z_{12} = \overline{Y}_2 \wedge \overline{Y}_1 \wedge \overline{X}_1$$

dar und wird mit Hilfe des UND-Gliedes 44 (Fig. 5) erzeugt. In ähnlicher Weise sind die an den ersten und zweiten Eingängen der ODER-Glieder 52,53 und 54 ankommenden Signale jeweils gleich:

$$Z_{21} = Y_2 \wedge Y_1 \wedge X_2$$
$$Z_{22} = \overline{Y}_2 \wedge \overline{Y}_1 \wedge \overline{X}_1$$
$$Z_{31} = Y_2 \wedge Y_1 \wedge \overline{X}_2$$

00295313

$$Z_{32} = \overline{Y}_2 \wedge Y_1 \wedge \overline{X}_1$$
$$Z_{41} = \overline{Y}_2 \wedge Y_1 \wedge X_1$$
$$Z_{42} = \overline{Y}_2 \wedge Y_1 \wedge X_1 .$$

und werden mit Hilfe der UND-Glieder 45,46,47,48,49,50 erzeugt.

Deshalb sind die an den Steuereingängen der Analogschalter 55, 56,57,58 von den jeweiligen Ausgängen der ODER-Glieder 51,52,53,54 (Fig. 12m,12n,12p,12q) ankommenden Impulse gleich den Funktionen:

$$Z_1 = Z_{11} \vee Z_{12}$$
$$Z_2 = Z_{21} \vee Z_{22}$$
$$Z_3 = Z_{31} \vee Z_{32}$$
$$Z_4 = Z_{41} \vee Z_{42}$$

Deshalb werden die an den ersten und zweiten Eingang der Spurumschalteinheit 17 (Fig. 1) vom dritten und vierten Ausgang des Fotoempfängers 14 des optoelektronischen Hauptkanals gegebenen Signale in der erforderlichen Reihenfolge umgeschaltet, wodurch das geforderte Schaltungsgesetz für die Spuren realisiert wird.

Die vorliegende Erfindung gestattet es, die Oberflächen-Informationsschreibdichte auf einem optischen Informationsträger um mindestens das Doppelte zu erhöhen.

## Gewerbliche Anwendbarkeit

Die Erfindung kann als Externspeicher von EDVA, beispielsweise von PCs, verwendet werden. Die ähnlichen optischen Speicher werden bei der Organisierung von Datenbanken unterschiedlicher Zwecksbestimmung bevorzugt.

00295313

## PATENTANSPRÜCHE

1. Optischer Speicher, der einen optischen Informationsträger mit Bezugsspuren auf seiner Speicherschicht, mindestens zwei mit dem optischen Informationsträger optisch gekoppelte optische Köpfe, deren jeder aus einer optischen Reihenschaltung von einer Quelle modulierter kohärenter Strahlung, einem beweglichen optischen Element, einem Lichtteiler, einem Fotoempfänger ausgeführt ist, dessen erster Ausgang an einen jeweiligen Signaleingang einer mit einem Datenbus verbundenen Steuereinheit angeschlossen ist, deren Signalausgänge an die Eingänge der Quellen modulierter kohärenter Strahlung der entsprechenden optischen Köpfe angeschlossen sind, mindestens zwei Selbstfokussiereinheiten, an deren jeweiligen Eingang der zweite Ausgang des Fotoempfängers des entsprechenden optischen Kopfes geschaltet und deren jeweiliger Ausgang mit dem beweglichen optischen Element ihres Kopfes kinematisch verbunden ist, mindestens eine Spurverfolgungseinheit für den optischen Informationsträger aufweist, deren Eingang mit dem dritten Ausgang eines der Fotoempfänger elektrisch gekoppelt ist, d a d u r c h   g e k e n n - z e i c h n e t, daß er eine Spurumschalteinheit (17), die zwischen dem Eingang der Spurverfolgungseinheit (16) und dem dritten Ausgang des Fotoempfängers (14) liegt, dessen vierter Ausgang an den zweiten Eingang der Spurumschalteinheit (17) gelegt ist, an deren dritten Eingang der erste Adressenausgang der Steuereinheit (18) angeschlossen ist, eine mit dem optischen Informationsträger (1) kinematisch verbundene Informationsadressierungseinheit (19) enthält, deren erster Eingang an den zweiten Adressenausgang der Steuereinheit (18) und deren zweiter Eingang an den Ausgang der Spurverfolgungseinheit (16) angekoppelt ist, und ein optischer Informationsträger (1) zur Anwendung kommt, der in einem mit einer Immersionsflüssigkeit (9) gefüllten Behälter (6) untergebracht ist und in seinen Wänden gegenüber den optischen Köpfen (10) liegende transparente Abschnitte (7) enthält, wobei auf jedem transparenten Abschnitt (7) ein unbewegliches optisches Element (8) angebracht ist, während die Bezugsspuren auf der Speicherschicht(4) des optischen Informationsträgers (1) nur auf dem Teil der Speicherschicht (4) ausgeführt sind, der unter einem unbeweglichen optischen Element (8) liegt, das mit dem optischen Kopf (10) gekoppelt ist, dessen Fotoempfänger (14) an die Spurumschalteinheit (17) angeschlossen ist.

2. Optischer Speicher nach Anspruch 1, d a d u r c h g e k e n n z e i c h n e t, daß er zusätzliche Spurverfolgungseinheiten (22) enthält, deren Anzahl um eins kleiner als die der optischen Köpfe (10) ist, wobei der Ausgang einer jeden zusätzlichen Spurverfolgungseinheit (22) mit einem zusätzlichen Eingang des beweglichen optischen Elementes (12) ihres optischen Kopfes (10) kinematisch verbunden und deren Eingang mit dem dritten Ausgang des Fotoempfängers (14) ihres optischen Kopfes (10) gekoppelt ist.

3. Optischer Speicher nach Ansprüchen 1,2, d a d u r c h g e k e n n z e i c h n e t, daß ein röhrenförmiger optischer Informationsträger (1) zum Einsatz gelangt, der eine zylindrische Unterlage (2) mit einer auf deren Oberfläche aufgetragenen Speicherschicht (4) enthält.

4. Optischer Speicher nach den Ansprüchen 1 bis 3, d a d u r c h g e k e n n z e i c h n e t, daß die Spurumschalteinheit (17) ein Monoflop (29) und ein T-Flipflop (30), deren Eingänge zusammen- und an den ersten Ausgang der Steuereinheit (18) angeschaltet sind, UND-Glieder (31,32), an deren erste Eingänge der erste Ausgang des Monoflops (29) und an deren zweite Eingänge der erste bzw. der zweite Ausgang des T-Flipflops (30) angeschlossen sind, Analogschalter (33,34,35), wobei an den Steuereingang des Analogschalters (33) der Ausgang des UND-Gliedes (31), an den Steuereingang des Analogschalters (34) der zweite Ausgang des Monoflops (29), an den Steuereingang des Analogschalters (35) der Ausgang des UND-Gliedes (32), an den Signaleingang des Analogschalters (33) der dritte Ausgang des in den mit dem Bezugsspuren (62,63) enthaltenden Abschnitt (5) der Speicherschicht (4) des optischen Informationsträgers (1) gekoppelten optischen Kopf (10) eingehenden Fotoempfängers (14), an den Signaleingang des Analogschalters (34) der vierte Ausgang des gleichen Fotoempfängers (14) angeschlossen ist, einen Analoginverter (36), dessen Eingang an den dritten Ausgang desselben Fotoempfängers (14) und dessen Ausgang an den Signaleingang des Analogschalters (35) angekoppelt ist, und einen Analogsummator (37) enthält, an dessen ersten, zweiten und dritten Eingang jeweils die Ausgänge der Analogschalter (33, 34, 35) angeschlossen sind und dessen Ausgang an seine Einheit (16) zur Überwachung einer Spur gelegt ist.

5. Optischer Speicher nach den Ansprüchen 1 bis 3, d a d u r c h   g e k e n n z e i c h n e t, daß die Spurumschalteinheit (17) ein Monoflop (38), dessen Eingang über einen ersten Verbindungs-Signalleiter an den ersten Adressenausgang der Steuereinheit (18) angeschlossen ist, ein Monoflop (39), dessen Eingang über einen zweiten Verbindungs-Signalleiter an den ersten Adressenausgang der Steuereinheit (18) angeschlossen ist, ein ODER-Glied (40), ein RS-Flipflop (41), an deren zwei Eingänge der erste bzw. der zweite Verbindungs-Signalleiter der Steuereinheit (18) angeschlossen sind, ein T-Flipflop (42), an dessen Eingang der Ausgang des ODER-Gliedes (40) angekoppelt ist, UND-Glieder (43,44,45,46,47,48,49,50), wobei an die drei Eingänge des UND-Gliedes (43) der erste Ausgang des RS-Flipflops (41), der zweite Ausgang des T-Flipflops (42) und der zweite Ausgang des Monoflops (39), an die drei Eingänge des UND-Gliedes (44) der erste Ausgang des RS-Flipflops (41), der erste Ausgang des T-Flipflops (42) und der erste Ausgang des Monoflops (39), an die drei Eingänge des UND-Gliedes (45) der erste Ausgang des RS-Flipflos (41), der erste Ausgang des T-Flipflops (42) und der zweite Ausgang des Monoflops (39), an die drei Eingänge des UND-Gliedes (46) der erste Ausgang des RS-Flipflops (41), der zweite Ausgang des T-Flipflops (42) und der erste Ausgang des Monoflops (39), an die drei Eingänge des UND-Gliedes (47) der zweite Ausgang des RS-Flipflops (41), der zweite Ausgang des T-Flipflops (42) und der zweite Ausgang des Monoflops (38), an die drei Eingänge des UND-Gliedes (48) der zweite Ausgang des RS--Flipflops (41), der zweite Ausgang des T-Flipflops (42) und der erste Ausgang des Monoflops (38), an die drei Eingänge des UND-Gliedes (49) der zweite Ausgang des RS--Flipflops (41), der erste Ausgang des T-Flipflops (42) und der zweite Ausgang des Monoflops (38), an die drei Eingänge des UND-Gliedes (50) der zweite Ausgang des RS--Flipflos (41), der erste Ausgang des T-Flipflops (42) und der erste Ausgang des Monoflops (38) angeschlossen sind, ein ODER-Glied (51), an dessen zwei Eingänge die Ausgänge der UND-Glieder (43,47) angekoppelt sind, ein ODER-Glied (52), an dessen zwei Eingänge die Ausgänge der UND-Glieder (44,48) geschaltet sind, ein ODER-Glied (53), an dessen zwei Eingänge die Ausgänge der UND-Glieder (45,49) gelegt sind, ein ODER-Glied (54), an dessen zwei Eingänge die Ausgänge der UND-Glieder (46,50) angeschlossen sind, Analogschalter (55,56,57,58), an deren Steuereingänge jeweils die Ausgänge der ODER-Glieder (51,52,53,54) und an den Signaleingang des Analogschalters (55) der dritte Ausgang des in den mit dem Bezugsspuren (62,63) enthaltenden Abschnitt (5) der Speicherschicht (4) des optischen Informationsträgers (1) gekoppelten optischen Kopf (10) eingehenden Fotoempfängers (14), an den Signaleingang des Analogschalters (56) der vierte Ausgang des gleichen Fotoempfängers (14) angeschlossen ist, Analoginverter (56,60), an deren Eingänge der dritte bzw. der vierte Ausgang desselben Fotoempfängers (14) und deren Ausgänge an die Signaleingänge der Analogschalter (57 bzw. 58) gekoppelt sind, und einen Analogsummator (61) enthält, an dessen vier Eingänge die Ausgänge der Analogschalter (55,56,57,58) angeschlossen sind und dessen Ausgang an die Spurverfolgungseinheit (16) gelegt ist.

FIG. 1

FIG. 3

FIG. 2

00295313

FIG. 4

FIG. 5

FIG. 6

FIG. 7

00295313

FIG. 8

FIG. 9

FIG.10a

FIG.10b

FIG.10c

FIG.10d

FIG.10e

FIG.10f

FIG.10g

00295313

FIG.11a

FIG.11b

FIG.11c

FIG.11d

FIG.11e

FIG.11f

FIG.11g

00295313

FIG.12a — $U_1$

FIG.12b — $U_2$

FIG.12c — $X_1$

FIG.12d — $\overline{X_1}$

FIG.12e — $X_2$

FIG.12f — $\overline{X_2}$

FIG.12g — $U_1 \vee U_2$

FIG.12h — $Y_1$

FIG.12i — $\overline{Y_1}$

FIG.12k — $Y_2$

FIG.12l — $\overline{Y_2}$

FIG.12m — $Z_1$

FIG.12n — $Z_2$

FIG.12p — $Z_3$

FIG.12q — $Z_4$

# INTERNATIONAL SEARCH REPORT

00295313

International Application No  PCT/SU87/00143

## I. CLASSIFICATION OF SUBJECT MATTER (if several classification symbols apply, indicate all) 6

According to International Patent Classification (IPC) or to both National Classification and IPC

$IPC^4$ - G 11 B 7/00

## II. FIELDS SEARCHED

| Minimum Documentation Searched 7 | |
|---|---|
| Classification System | Classification Symbols |
| $IPC^4$ | G 11 B 7/00, 7/24, 25/02, G 01 D 9/42 |

Documentation Searched other than Minimum Documentation
to the Extent that such Documents are Included in the Fields Searched 8

## III. DOCUMENTS CONSIDERED TO BE RELEVANT 9

| Category * | Citation of Document, 11 with indication, where appropriate, of the relevant passages 12 | Relevant to Claim No 13 |
|---|---|---|
| A | DE,A1,2522405(Philips Patentverwaltung GmbH) 09 December 1976 (09.12.76),see fig. 3,4 (cited in the description) -- | 1 |
| A | US,A,4404571,(Canon Kabushiki Kaisha), 13 September 1983 (13.09.83),see the abstract -- | 3 |
| A | US,A,4423426,(Canon Kabushiki Kaisha), 27 December 1983 (27.12.83),see the abstract -------- | 3 |

* Special categories of cited documents: 10

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 02 March 1988 (02.03.88) | 31 March 1988 (31.03.88) |
| International Searching Authority | Signature of Authorized Officer |
| ISA/SU | |

Form PCT/ISA/210 (second sheet) (January 1985)